# EUROPEAN PATENT SPECIFICATION

(11) **EP 1 885 125 B1**
(45) Date of publication and mention of the grant of the patent: **24.10.2012**
(21) Application number: 07290298.4
(22) Date of filing: 08.03.2007
(51) Int. Cl.: H04N 5/64, G06F 1/16

(54) **Display module cabinet**
Gehäuse für ein Anzeigemodul
Affichage de module d'armoire

(30) Priority: 03.08.2006 KR 20060073217
(43) Date of publication of application: 06.02.2008
(73) Proprietor: LG Electronics Inc., Youngdungpo-gu Seoul (KR)
(72) Inventor: Lee, Moon Hee, Goomi-si Kyungsangbook-do (KR); Kim, Jong Hwa, Goomi-si Kyungsangbook-do (KR); Yun, Kum Young, Goomi-si Kyungsangbook-do (KR); Kim, Chang Sub, Oeiseong-Koon Kyungsangbook-do (KR); Jeon, Ho Keun, Goomi-si Kyungsangbook-do (KR); Kim, Jae Ho, Goomi-si Kyungsangbook-do (KR); Park, Jong Man, Daegoo-si Kyungsangbook-do (KR)
(74) Representative: Cabinet Plasseraud

(56) References cited:
- EP-A- 0 185 625
- US-A- 4 635 809
- US-A- 5 990 985
- US-A1- 2002 080 297
- US-A1- 2002 171 774
- US-A1- 2003 112 379
- US-B1- 6 396 551

## Description

### BACKGROUND OF THE INVENTION

### Field of the Invention

The present invention relates to a cabinet for accommodating a display module such as an LCD module.

### Description of the Related Art

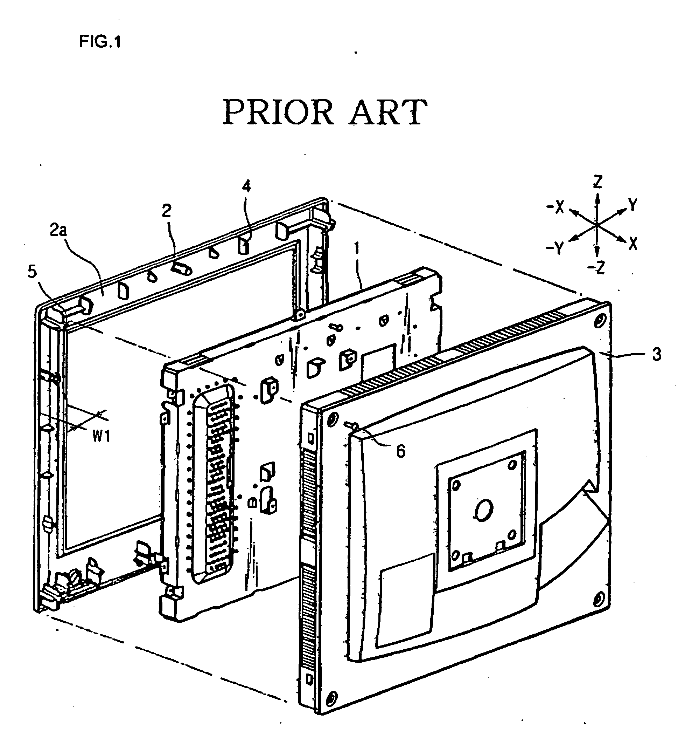

FIG. 1 is an exploded perspective view illustrating a conventional display module cabinet. Referring to FIG. 1, a front cover 2 and a rear cover 3 are assembled by screws 6 in order to include a display module 1. Bosses 5 for the screws 6 are also needed and thus a width (W1) of a front frame portion 2a in the front cover 2 requires a predetermined minimum dimension (e.g. minimum 3 cm). Therefore, ribs 4 having a predetermined dimension are formed on an inner surface of the front cover 2. The ribs 4 guide the display module 1 to a position thereof.

However the wide width (W1) of the display device (e.g. a computer monitor) above is not suitable for recent trends such as miniaturization and slim design in display device design.

In addition, because of the screws 6 assembling the front cover 2 and the rear cover 3 together, it costs more and takes more time to assemble the display device. Although rear cover design may be sometimes important (e.g. customers used to look at a rear cover of a display device at a bank), the screws 4 also restrict the rear cover design.

Another injection moulded slim display is disclosed in US 2002/0080297.

### SUMMARY OF THE INVENTION

Accordingly, the present invention is directed to a display device that substantially obviates one or more problems due to limitations and disadvantages of the

### related art.

An object of the present invention is to provide a display module cabinet having a slim front frame width and improved design as set out in claim 1.

Another object of the present invention is to provide a display module cabinet having an elegant rear cover, which reduces costs and time in assembling the display device.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, there is provided a display module cabinet including a front cover including a front frame portion defining an opening, and a side frame portion extended backward from the front frame portion and including a thick portion and a thin portion that are sequentially formed and a rear cover including a rear portion, and a peripheral portion extended forward from the rear portion and including a thick portion and a thin portion that are sequentially formed, wherein the front cover further includes a protruding portion extended backward from the thick portion of the front cover so as to be interposed between the thin portion of the rear cover and the display module, and the rear cover further includes a protruding portion extended forward from the thick portion of the rear cover so as to be interposed between the thin portion of the front cover and the display module.

The thin portion of the front cover may be an inner surface of the side frame portion having a sunken portion, and the thin portion of the rear cover may be an inner surface of the peripheral portion having a sunken portion.

A first hooking portion may be formed on an inner surface of the thin portion of at least one of the front cover and the rear cover, and a second hooking portion may be formed in the protruding portion formed on the thick portion of the other of the front cover and the rear cover.

The first hooking portion may include an inclined portion.

Corners of the sequentially formed thick and thin portions may be rounded.

The thick portions of the front and rear covers may have thicknesses in a range of 2 to 4 mm.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is an exploded perspective view illustrating a conventional display module cabinet;

FIG. 2 is a perspective view illustrating a rear cover according to an embodiment of the present invention;

FIG. 3 is a view illustrating a front cover according to an embodiment of the present invention;

FIG. 4 is a sectional view taken along the line IV-IV of FIG. 3; and

FIG. 5 is an enlarged view of portion V of FIG. 3 illustrating assembling a front and second covers according to an embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

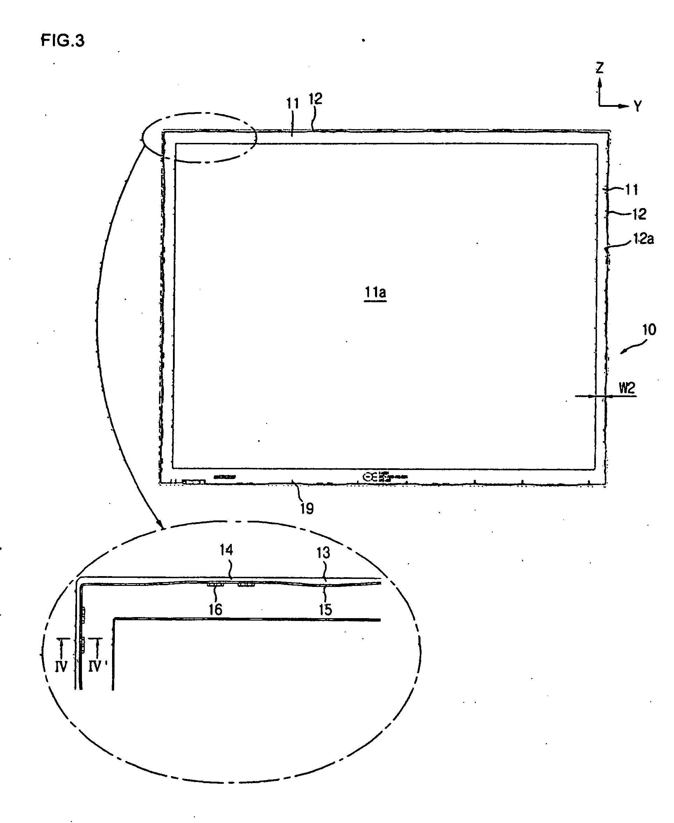

Referring to FIG. 3, a front cover 10 includes a front frame portion 11 and a side frame portion 12. The front frame portion 11 defines an opening 11a. The side frame portion 12 is extended backward (X-axis direction) from the front frame portion 11 and includes a thick portion 13 and a thin portion 14 that are alternatively formed. In a display module, the opening 11a is a display portion displaying images. That is, the opening 11a is a hole or a transparent member in order to display images for users. The thin portion 14 of the front cover 10 is a portion where an inner surface 12a of the side frame portion 12 is sunken.

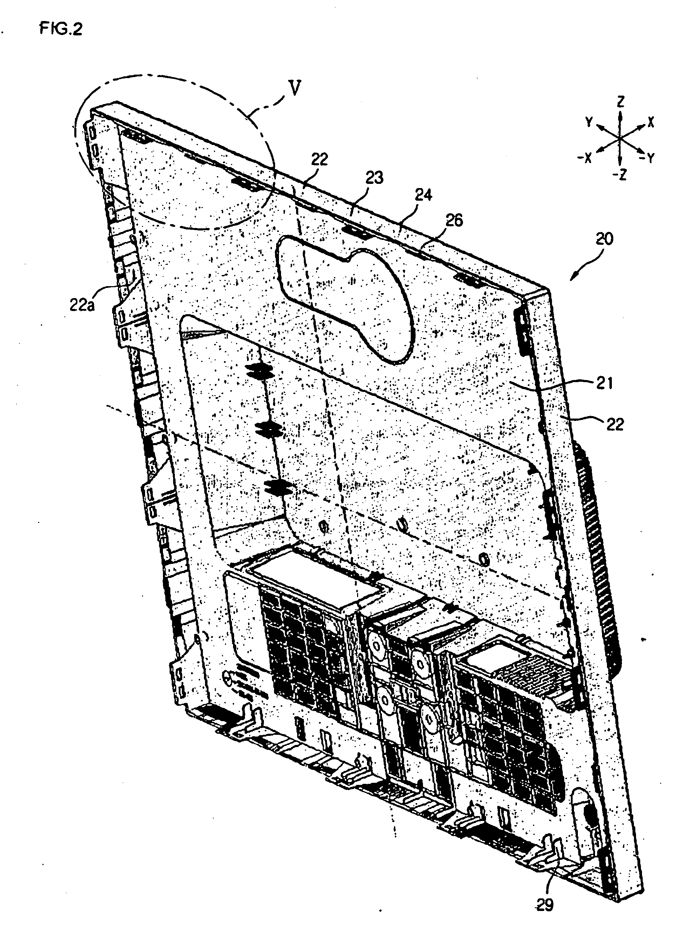

Referring to FIG. 2, a rear cover 20 includes a rear portion 21 and a peripheral portion 22. The peripheral portion 22 is extended forward (-X-axis direction) from the rear portion 21 and includes a thick portion 23 and a thin portion 24 that are alternatively formed. The thin portion 24 of the rear cover 20 is a portion where an inner surface 22a of the peripheral portion 22 is sunken.

The thicknesses of the thick portion 13 of the front cover 10 and the thick portion 23 of the rear cover 20 are in a range of 2 to 4 mm. The thickness of the thick portion 23 of the rear cover 10 is 4 mm. The thicknesses of the covers 10 and 20 may vary on specific plastic materials used for a molding.

In the front cover 10 and the rear cover 20, borders between thick portions 13 and 23 and the thin portions 14 and 24 are preferably rounded, because of a method of manufacturing the front cover 10 and the rear cover 20. That is, the front cover 10 and the rear cover 20 are formed by a plastic injection molding. When an edge feature is between the thick portions 13 and 23 and the thin portions 14 and 24, cracks may appear between the thick portions 13 and 23 and the thin portions 14 and 24 due to the thermal contraction difference during cooling. Because of the cracks, the front cover 10 and/or the rear cover 20 may be broken when the front cover 10 and the rear cover 20 are assembled and/or detached from each other. Therefore, the thick portions 13 and 23 are smoothly connected with the thin portions 14 and 24 without an edge feature, respectively.

Protruding portions 15 are formed at the thick portion 13 of the front cover 10. The protruding portions 15 are protruded backward and extended to be interposed between the thin portion 24 of the rear cover 20 and a display module 30. Protruding portions 25 and 26 are formed at the thick portion 23 of the rear cover 20. The protruding portions 25 and 26 are protruded forward and extended to be interposed between the thin portion 14 of the front cover 10 and the display module 30. These protrusions 15, 25, and 26 prevent the front cover 10 and the rear cover 20 from being separated from each other in an arbitrary direction in the YZ-plane.

A first hooking portion 16 is formed on the inner surface 12a of the thin portion 14 of at least one of the front cover 10 and the rear cover 20 and a second hooking portion 25a is formed in the corresponding protruding portion 25 on the thick portion 23 of the other of the front cover 10 and the rear cover 20 (although the present embodiment is described from the premise that the first hooking portion 16 is formed in the front cover 10 and the second hooking portion 25a is formed in the rear cover 20, the opposite is possible, too).

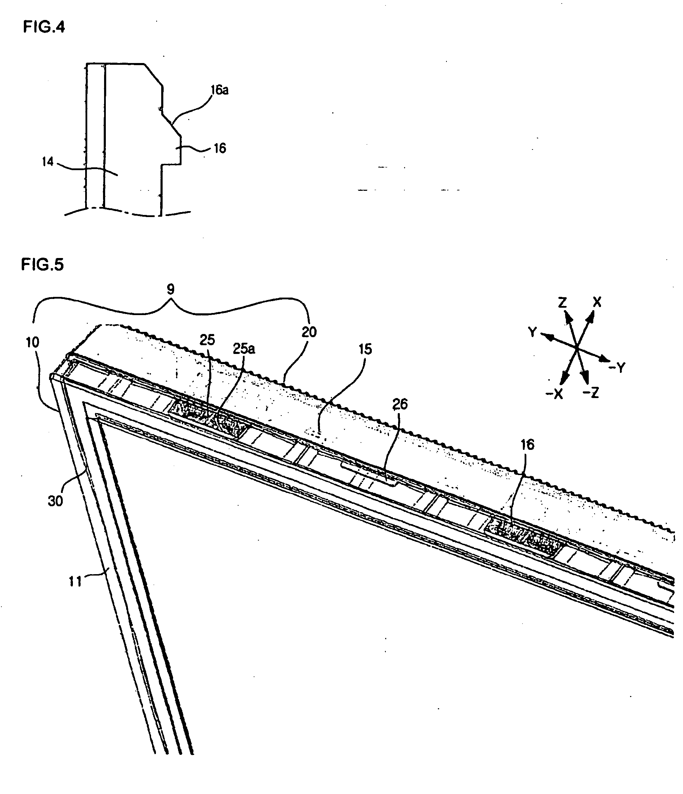

When the front and rear cover 10 and 20 are pushed against each other in parallel with the X-axis, the first and second hooking portions 16 and 25a hook to each other. Therefore, the first and second hooking portions 16 and 25a are not detached from each other in parallel with the X-axis. When an inclined portion 16a illustrated in FIG. 4 is formed on the first hooking portion 16, the first and second hooking portions 16 and 25a easily hook to each other using small push strength.

Under the structure of the front and rear cover 10 and 20, although irregular strength is generally applied on a display device, the front and rear cover 10 and 20 are not detached from each other in any direction. The irregular strength is caused by the use and move of the display device. Therefore, unlike a conventional cabinet, a cabinet 9 according to the current embodiment does not require the screws 6 and bosses 5 illustrated in FIG. 1. The ribs 4 illustrated in FIG. 1 are not required, either. As a result, a width (W2) of the front frame portion 11 of the cabinet 9 according to the present invention is remarkably smaller than the width (W1) of the front frame portion 2a of the conventional front cover 2 illustrated in FIG. 1.

In detail, a diameter of the bosses 5 illustrated in FIG. 1 is at least 1 cm. Therefore, the front frame portion 11 according to the present invention is smaller than the front frame portion 2a illustrated in FIG. 1 by 1 cm in Y, -Y, Z, and -Z-axis directions, respectively. Therefore, the size of a display device becomes small, which improves total design of the display device. Although ribs 19 and 29 with a length of about 5 mm illustrated in FIGS 2 and 3 are formed to make a lower portion of the front frame portion 11 thick, which gives a user visual stability, they are not essential.

As described above, the front and rear cover 10 and 20 are pushed against each other to be assembled according to the present invention, which reduces costs and time in assembling the cabinet 9. In addition, the cabinet 9 has the elegant rear cover 20 without the screws 6.

Meanwhile, one of the side frame portion 12 of the front cover 10 and the peripheral portion 22 of the rear cover 20 could be designed to have a thick portion with a thickness from 2 to 4 mm all around and the other may have a thin portion all around. However, under this construction, positioning the display module 30 is inconvenient, and the other having the thin portion all around is excessively weak.

According to the present invention, the display module cabinet having the slim front frame width and improved design is provided. In addition, the display module cabinet having the elegant rear cover is provided, which reduces costs and time in assembling the display device. Furthermore, the display module cabinet having the strong front and rear covers is provided.

It will be apparent to those skilled in the art that various modifications and variations can be made in the present invention. Thus, it is intended that the present invention covers the modifications and variations of this invention provided they come within the scope of the appended claims and their equivalents.

## Claims

1. A display module cabinet comprising:
a front cover (10) including a front frame portion (11) defining an opening (11a) and a side frame portion (12) extended backward from the front frame portion (11), the side frame portion (12) including a thick portion (13) and a thin portion (14) that are alternatively formed; and
a rear cover (20) including a rear portion (21) and a peripheral portion (22) extended forward from the rear portion (21), the peripheral portion (22) including a thick portion (23) and a thin portion (24) that are alternatively formed;
wherein the front cover (10) further includes a protruding portion (15) extending backward from the thick portion (13) of the front cover (10) so as to be interposed between the thin portion (24) of the rear cover (20) and a display module (30), and
the rear cover (20) further includes a protruding portion extending (25, 26) forward from the thick portion (23) of the rear cover (20) so as to be interposed between the thin portion (14) of the front cover (10) and the display module (30),
a first hooking portion (16) is formed on an inner surface (12a) of the thin portion (14) of one of the front cover (10) and the rear cover (20), and a second hooking portion (25a) is formed in the protruding portion (25) formed on the corresponding thick portion (23) of the other of the front cover (10) and the rear cover (20).

2. The display module cabinet according to claim 1, wherein the thin portion (14) of the front cover (10) is a portion where an inner surface (12a) of the side frame portion (12) is sunken, and the thin portion (24) of the rear cover (20) is a portion where an inner surface (22a) of the peripheral portion is sunken.

3. The display module cabinet according to claim 1, wherein the first hooking portion (16) comprises an inclined portion (16a).

4. The display module cabinet according to any one of claims 1, 2 and 3, wherein the thick (13, 23) and thin (14, 24) portions are connected smoothly with each other.

5. The display module cabinet according to any one of claims 1, 2 and 4, wherein the thick portions (13, 23) of the front and rear covers (10, 20) has a thickness in a range of 2 mm to 4 mm.

## Patentansprüche

1. Gehäuse für ein Anzeigemodul, das Folgendes umfasst:
eine Frontabdeckung (10), die einen Frontrahmenabschnitt (11), der eine Öffnung (11a) definiert, und einen Seitenrahmenabschnitt (12), der sich von dem Frontrahmenabschnitt (11) nach hinten erstreckt, enthält, wobei der Seitenrahmenabschnitt (12) einen dicken Abschnitt (13) und einen dünnen Abschnitt (14) enthält, die im Wechsel ausgebildet sind; und
eine rückseitige Abdeckung (20), die einen hinteren Abschnitt (21) und einen Umfangsabschnitt (22), der sich von dem hinteren Abschnitt (21) nach vorn erstreckt, enthält, wobei der Umfangsabschnitt (22) einen dicken Abschnitt (23) und einen dünnen Abschnitt (24) enthält, die im Wechsel ausgebildet sind;
wobei die Frontabdeckung (10) des Weiteren einen hervorstehenden Abschnitt (15) enthält, der sich von dem dicken Abschnitt (13) der Frontabdeckung (10) so nach hinten erstreckt, dass er sich zwischen dem dünnen Abschnitt (24) der rückseitigen Abdeckung (20) und einem Anzeigemodul (30) befindet, und
die rückseitige Abdeckung (20) des Weiteren einen hervorstehenden Abschnitt (25, 26) enthält, der sich von dem dicken Abschnitt (23) der rückseitigen Abdeckung (20) so nach vorn erstreckt, dass er sich zwischen dem dünnen Abschnitt (14) der Frontabdeckung (10) und dem Anzeigemodul (30) befindet,
ein erster Hakenabschnitt (16) an einer Innenfläche (12a) des dünnen Abschnitts (14) der Frontabdeckung (10) oder der rückseitigen Abdeckung (20) ausgebildet ist und ein zweiter Hakenabschnitt (25a) in dem hervorstehenden Abschnitt (25) ausgebildet ist, der an dem entsprechenden dicken Abschnitt (23) der anderen Abdeckung, d. h. der rückseitigen Abdeckung (20) bzw. der Frontabdeckung (10) ausgebildet ist.

2. Gehäuse für ein Anzeigemodul gemäß Anspruch 1, wobei der dünne Abschnitt (14) der Frontabdeckung (10) ein Abschnitt ist, wo eine Innenfläche (12a) des Seitenrahmenabschnitts (12) eingesenkt ist, und der dünne Abschnitt (24) der rückseitigen Abdeckung (20) ein Abschnitt ist wo eine Innenfläche (22a) des Umfangsabschnitts eingesenkt ist.

3. Gehäuse für ein Anzeigemodul gemäß Anspruch 1, wobei der erste Hakenabschnitt (16) einen schrägen Abschnitt (16a) umfasst.

4. Gehäuse für ein Anzeigemodul gemäß einem der Ansprüche 1, 2 und 3, wobei die dicken Abschnitte (13, 23) und die dünnen Abschnitte (14, 24) bündig miteinander verbunden sind.

5. Gehäuse für ein Anzeigemodul gemäß einem der Ansprüche 1, 2 und 4, wobei die dicken Abschnitte (13, 23) der Frontabdeckung und der rückseitigen Abdeckung (10, 20) eine Dicke im Bereich von 2 mm bis 4 mm aufweisen.

## Revendications

1. Boîtier de module d'affichage comprenant :
un capot avant (10) comprenant une portion de cadre avant (11) définissant une ouverture (1 la) et une portion de cadre de côté (12) s'étendant vers l'arrière depuis la portion de cadre avant (11), la portion de cadre de côté (12) comprenant une portion épaisse (13) et une portion mince (14) qui sont formées en alternance ; et
un capot arrière (20) comprenant une portion arrière (21) et une portion périphérique (22) s'étendant vers l'avant depuis la portion arrière (21), la portion périphérique (22) comprenant une portion épaisse (23) et une portion mince (24) qui sont formées en alternance ;
dans laquelle le capot avant (10) comprend en outre une portion faisant saillie (15) s'étendant vers l'arrière depuis la portion épaisse (13) du capot avant (10) afin d'être interposée entre la portion mince (24) du capot arrière (20) et un module d'affichage (30), et
le capot arrière (20) comprend en outre une portion faisant saillie (25, 26) s'étendant vers l'avant depuis la portion épaisse (23) du capot arrière (20) afin d'être interposée entre la portion mince (14) du capot avant (10) et le module d'affichage (30),
une première portion d'accrochage (16) est formée sur une surface intérieure (12a) de la portion mince (14) de l'un du capot avant (10) et du capot arrière (20), et une deuxième portion d'accrochage (25a) est formée dans la portion faisant saillie (25) formée sur la portion épaisse correspondante (23) de l'autre du capot avant (10) et du capot arrière (20).

2. Boîtier de module d'affichage selon la revendication 1, dans laquelle la portion mince (14) du capot avant (10) est une portion où une surface intérieure (12a) de la portion de cadre de côté (12) est affaissée, et la portion mince (24) du capot arrière (20) est une portion où une surface intérieure (22a) de la portion périphérique est affaissée.

3. Boîtier de module d'affichage selon la revendication 1, dans laquelle la première portion d'accrochage (16) comprend une portion inclinée (16a).

4. Boîtier de module d'affichage selon l'une quelconque des revendications 1, 2 et 3, dans laquelle la portion épaisse (13, 23) et la portion mince (14, 24) se raccordent en douceur l'une à l'autre.

5. Boîtier de module d'affichage selon l'une quelconque des revendications 1, 2 et 4, dans laquelle les portions épaisses (13, 23) des capots avant et arrière (10, 20) ont une épaisseur dans une plage de 2 mm à 4 mm.
